# EUROPEAN PATENT APPLICATION

(11) **EP 1 462 244 A1**
(43) Date of publication of application: **29.09.2004**
(21) Application number: 04251783.9
(22) Date of filing: 26.03.2004
(51) Int. Cl.: B32B 17/10, C03C 3/087, C03C 4/02, C03C 4/08, B60S 1/08, G01N 21/43

(54) **Tinted laminated vehicle glazing**

(30) Priority: 28.03.2003 GB 0307173; 28.03.2003 GB 0307175
(71) Applicant: Pilkington Automotive Limited, St Helens, WA10 3TT (GB)
(72) Inventor: Torr, Ashley Carl, Aughton Ormskirk, Lancashire L39 6RY (GB)
(74) Representative: Halliwell, Anthony Charles

(57) **Abstract**

A laminated vehicle glazing comprising two glass plies, at least one of which is tinted and has a colourant portion comprising (by weight) 0.30 to 0.65 % Fe₂O₃, up to 0.25 % FeO and at least one of Co₃O₄) greater than 40 ppm and/or Se up to 10 ppm; the colourant composition being selected for the optical properties it provides to the tinted glass ply, which enable use of the glazing with an optical sensor. The glazing has an LT_{A} ≥ 70 % and it exhibits TE ≥ 56%. When the glazing includes a shadeband, at a position within the shadeband that is 70 mm from a shadeband bottom-edge marker, the transmission is greater than 20 % at wavelengths of between 800 and 950 nm.

Further disclosed is tinted glass in sheet form having a composition including a colourant portion according to the composition above.

## Description

The present invention relates to a laminated vehicle glazing, constructed from at least one ply of tinted glass, which may be used in conjunction with a sensor, and to a novel tinted glass in sheet form useful, in appropriate thicknesses, for the production of such a glazing.

Sensors, for example moisture and light (visible and near-infrared) sensors (hereinafter included in the description as "optical sensors") are well known in combination with vehicle glazings, particularly windscreens. Laminated windscreens incorporating moisture sensors are described and claimed in the applications EP 0825076 A1 and EP 0723897 A1, where in each case a plastic interlayer ply laminates together two glass plies. In EP '076, the moisture sensor is located in an aperture formed within the plies of the windscreen (excluding the glass ply that would be external with respect to a vehicle into which the windscreen may be fitted (the "outer glass ply")), and is held in place by a lid or cover that exerts pressure onto it, whereby it is forced against the inner face of the outer glass ply. EP '897 is similar to EP '076; the sensor is located in an aperture formed within the plies of the windscreen, other than in the outer glass ply. However, in EP '897 the sensor is fixed directly to the inner face of the outer glass ply by a thin adhesive film.

Moisture sensors for use with vehicles generally work on a principle based on comparison of a received signal with a reference electrical threshold signal. A transmitter emits at least one infrared signal to propagate at a particular angle (usually 45°) through a single glass sheet of a certain thickness. A receiver collects the signal as it is reflected by the glass sheet and transforms it into an electrical signal. Comparison of the transformed electrical signal with the reference signal provides information as to the presence of moisture (if any) on the opposite surface of the glass sheet to which the sensor is mounted, i.e. the external surface of the windscreen. In response to the comparison, an action, for example operation of windscreen wipers, may result.

Light sensors work on a similarly general principle wherein a received signal is compared with a reference threshold signal. The intensity of visible light (having a wavelength of between 420 and 700 nm) and near-infrared radiation (having a wavelength of between 700 and 1200 nm) falling onto a receiver of the sensor is compared to a threshold reference value. When the intensity of the received light drops below the threshold value, an action, for example switching on of the sidelights or headlights of the vehicle, may result.

In a laminated windscreen, a plastic interlayer ply exists between a sensor that is attached to the innermost surface of the windscreen and the external surface of the windscreen, thus a signal received by the receiving element of a sensor necessarily passes through the interlayer ply before it is subsequently detected. The physical state of a plastic interlayer ply is temperature dependent; consequently temperature-dependent variations in its state may distort both the incident and reflected signals that pass through it. Both EP '076 and '897 describe moisture sensors that operate on a single ply of glass (the outer glass ply), and thus the windscreen in both applications requires a single aperture through both the inner glass ply and the interlayer ply, to prevent the signal received by the respective sensors from unwanted distortions. Distortions may be caused by the presence of multiple glass plies in addition to those caused by the presence of the plastic interlayer ply.

Although creation of an aperture in a laminated glazing, exposing the inner surface of the outer glass ply to which a sensor is mounted, allows a sensor to be used in conjunction with a laminated glazing, the production of such a glazing is fraught with difficulties. Creation of an aperture in a glass sheet, for example by drilling a hole, is an operation that carries a high risk of breakage of the sheet. There is likely to be an increase in the number of glass sheets broken in the production of a unit number of "apertured" laminated glazings compared to the same unit number of glazings constructed without an aperture in one of the glass sheets. Furthermore, creation of an aperture in a glass sheet is an additional processing step, as is clean removal of the relevant portion of interlayer ply after the glazing has been laminated, each of which adds to both the cost and the time taken to produce a required glazing. Subsequent to lamination of the glazing, yet further processing is required: the sensor has to be fitted into the aperture and secured into place using the appropriate chosen securing means, before the filled aperture can be finished aesthetically.

Recently the performance of sensors has improved to the extent that a currently available moisture sensor can be used in conjunction with a laminated glazing without the need for exposure of the inner face of the outer glass ply of the glazing. Current moisture sensors emit an infrared signal that reaches the outer glass ply *via* the inner glass ply and the interlayer ply, whereupon it is reflected back to a receiver carrying information regarding the outer surface of the outer glass ply. However, there are few laminated glazing constructions that current moisture and light sensors can actually be used in conjunction with. A conventional clear glass laminate, with which a current optical sensor can be used without modification to the laminate, normally has the construction:

Clear glass ply (2.1 mm) / Interlayer Ply (0.76 mm) / Clear Glass Ply (2.1 mm) The interlayer ply is usually a sheet of polyvinylbutyral ("PVB"). The construction in which one of the clear glass plies has been replaced with a ply of glass which is tinted to a light green colour may also be used with a current sensor. However, use of current optical sensors is limited mainly by the level of electromagnetic radiation transmitted by each of the plies in a laminated glazing. A clear glass ply defines a reference for the maximum amount of radiation capable of being transmitted. A tinted glass ply is intrinsically less capable of transmitting radiation when compared to a clear glass ply; this is a consequence of the colouring elements in the tinted glass, which absorb radiation of varying wavelengths in varying amounts. Hence, some glass sheets tinted to certain colours can form part of a laminated construction which is to be used with a current optical sensor, whereas others cannot, for example currently available blue and grey tinted glass sheets are in some cases not compatible (the glass may have to be specially selected with higher transmission).

A further limitation on the number of tinted laminated glazings with which a current optical sensor may be used arises when a shadeband is included in the laminate construction, in the region where the sensor may be located. A shadeband is a band of tinted interlayer material that extends across the top edge of the windscreen. Its purpose is to reduce the amount of visible light transmitted through the windscreen from any external light source, thus reducing the level of glare experienced by the front-seat occupants, especially the driver, of the vehicle, as is well known. Usually a shadeband is provided as a locally pre-tinted sheet of PVB that is used as the laminating ply. The nature and purpose of a shadeband leads to the limitation on the laminated windscreens having a shadeband with which a current sensor can be used (in the region of the shadeband), as radiation transmitted through the entire laminate is purposely further reduced by the presence of the shadeband.

Surprisingly, it was discovered by the present inventor that a sheet of blue tinted glass, or a sheet of grey tinted glass, of particular composition to be described herein, can be used along with a sheet of clear glass in a laminate construction similar to the one previously described herein. The resultant laminate is suitable for use with a current optical sensor. It was yet further surprising for the present inventor to discover that such a laminate, when provided with a shadeband, remains suitable for use with a current sensor when the sensor is located in a region over which the shadeband exists.

According to a first aspect of the present invention there is provided a laminated vehicle glazing, for use with an optical sensor, comprising
two glass plies laminated together by an interlayer ply therebetween,
wherein one glass ply is tinted and has a colourant portion comprising 0.30 to 0.65 % by weight total iron, a ferrous oxide content up to 0.25 % by weight and a cobalt content greater than 40 ppm or a selenium content up to 10 ppm,
with the proviso that one or both of cobalt and selenium must be present in the tinted glass ply.
For the avoidance of doubt, throughout this specification total iron is calculated as Fe₂O₃, ferrous oxide is calculated as FeO, a cobalt content as Co₃O₄ and a selenium content as Se.

Typically, the tinted glass ply may contain cobalt in an amount less than 25 ppm when selenium is present.

In one embodiment of the first aspect of the present invention there is provided a laminated vehicle glazing, for use with an optical sensor, comprising
two glass plies laminated together by an interlayer ply therebetween,
wherein one glass ply is tinted and has a colourant portion comprising 0.35 to 0.65 % by weight total iron, a ferrous oxide content up to 0.25 % by weight and a cobalt content greater than 40 ppm.

The tinted glass ply described in the preceding paragraph may be described as having a blue colouration.

In a second embodiment of the first aspect of the present invention there is provided a laminated vehicle glazing, for use with an optical sensor, comprising
two glass plies laminated together by an interlayer ply therebetween,
wherein one glass ply is tinted and has a colourant portion comprising 0.30 to 0.60 % by weight total iron, a ferrous oxide content up to 0.25 % by weight and a selenium content up to 10 ppm. The tinted glass ply may further comprise cobalt in an amount less than 25 ppm.

In the second embodiment of the invention, the ply of tinted glass may be described as having a grey colouration.

Preferably the total iron comprised in the blue colourant portion is 0.40 to 0.60 % by weight, more preferably 0.43 to 0.59 % by weight and most preferably 0.48 to 0.58 % by weight, whereas the total iron comprised in the grey colourant portion is preferably 0.35 to 0.60 % by weight, more preferably 0.40 to 0.57 % by weight and most preferably 0.44 to 0.55 % by weight.

Preferably the ferrous oxide content is greater than 0.05 %, more preferably in the range from 0.10 to 0.20 %, and most preferably up to 0.16 % in the blue colourant portion, and up to 0.18 % in the grey colourant portion.

When the cobalt content is greater than 40 ppm, it is nonetheless preferably less than 70 ppm, more preferably in the range from 42 to 60 ppm, and most preferably from 44 to 55 ppm.

The selenium content is preferably up to 8 ppm, more preferably in the range from 1 to 5 ppm, and most preferably from 2 to 4 ppm. With such a selenium content, when cobalt is present in an amount less than 25 ppm it is nonetheless preferably greater than 2 ppm, more preferably in the range from 6 to 21 ppm, and most preferably from 10 to 15 ppm.

According to a second aspect of the present invention there is provided tinted glass in sheet form having a composition including a colourant portion comprising
0.30 to 0.65 % by weight total iron,
a ferrous oxide content up to 0.25 % by weight, and
a cobalt content greater than 40 ppm, or
a selenium content up to 10 ppm,
with the proviso that one or both of cobalt and selenium must be present in the glass.

Typically, the tinted glass may contain cobalt in an amount less than 25 ppm when selenium is present.

In one embodiment of the second aspect of the present invention there is provided blue tinted glass in sheet form having a composition including a colourant portion comprising
0.35 to 0.65 % by weight total iron,
a ferrous oxide content up to 0.25 % by weight, and
a cobalt content greater than 40 ppm.

In a second embodiment of the second aspect of the present invention there is provided grey tinted glass in sheet form having a composition including a colourant portion comprising
0.30 to 0.60 % by weight total iron,
a ferrous oxide content up to 0.25 % by weight, and
a selenium content up to 10 ppm.
The tinted glass may further comprise cobalt in an amount less than 25 ppm.

Again, preferably the total iron comprised in the blue colourant portion is 0.40 to 0.60 % by weight, more preferably 0.43 to 0.59 % by weight and most preferably 0.48 to 0.58 % by weight, whereas the total iron comprised in the grey colourant portion is preferably 0.35 to 0.60 % by weight, more preferably 0.40 to 0.57 % by weight and most preferably 0.44 to 0.55 % by weight.

Preferably the ferrous oxide content is greater than 0.05 %, more preferably in the range from 0.10 to 0.20 %, and most preferably up to 0.16 % in the blue colourant portion, and up to 0.18 % in the grey colourant portion.

When the cobalt content is greater than 40 ppm, it is nonetheless preferably less than 70 ppm, more preferably in the range from 42 to 60 ppm, and most preferably from 44 to 55 ppm.

The selenium content is preferably up to 8 ppm, more preferably in the range from 1 to 5 ppm, and most preferably from 2 to 4 ppm. With such a selenium content, when cobalt is present in an amount less than 25 ppm, it is nonetheless preferably greater than 2 ppm, more preferably in the range from 6 to 21 ppm, and most preferably from 10 to 15 ppm.

When the tinted glass sheet is to be used as a component of a laminate, it preferably has a thickness in the range from 1.4 to 3.0 mm, more preferably in the range from 1.5 to 2.6 mm and most preferably has a thickness of 2.1 mm. Alternatively, when the tinted glass sheet is to be used in monolithic form, it preferably has a thickness in the range from 3.5 to 5.0 mm, more preferably in the range from 3.7 to 4.5 mm and most preferably has a thickness less than 4.3 mm, (usually around 3.9 mm).

Generally the blue tinted glass sheet has at a thickness of 2.1 mm or 3.9 mm a dominant wavelength between 480 and 500 nm, an excitation purity of at least 3 % and colour specified by -9 ≤ a* ≤ -2, -9 ≤ b* ≤ -1. Preferably the dominant wavelength is between 480 and 490 nm, and further preferably between 482 and 488 nm. Preferably the excitation purity is between 3.5 and 10 %, and further preferably is between 4 and 7.5 %. Preferably the colour is specified by -7 ≤ a* ≤ -3, -7 ≤ b* ≤ -2.

In this specification, both dominant wavelength and excitation purity are measured using a D65 Illuminant with a 2° standard observer. The colour of the tinted glass is specified by the CIELAB co-ordinates, which are also measured using a D65 Illuminant with a 2° standard observer.

The grey tinted glass sheet generally has at a thickness of 2.1 mm or 3.9 mm a dominant wavelength between 510 and 535 nm, an excitation purity up to 3 % and colour specified by -6 ≤ a* ≤ 0, -3 ≤ b* ≤ +3. Preferably the dominant wavelength is between 513 and 530 nm, and further preferably between 518 and 528 nm. Preferably the excitation purity is between 0.3 and 2.5 %, and further preferably is between 0.6 and 2 %. Preferably the colour is specified by -5 ≤ a* ≤ -2, -1 ≤ b* ≤ +2.

The base glass of the tinted glass sheet may typically have the following composition (by weight):

| | |
|---|---|
| SiO₂ | 70-75 % |
| Al₂O₃ | 0-5% |
| Na₂O | 10-15% |
| K₂O | 0-5 % |
| MgO | 0-10% |
| CaO | 5-15 % |
| SO₃ | 0-2 % |

The tinted glass sheet may further comprise impurities including oxides of chromium, manganese, titanium, cerium, zirconium, barium, strontium and boron.

According to a third aspect of the present invention there is provided a laminated vehicle glazing, for use with an optical sensor, comprising
two glass plies laminated together by an interlayer ply therebetween,
wherein one glass ply is tinted glass according to the second aspect of the invention.

When the laminated vehicle glazing in the first and third aspects of the invention has a visible light transmission ("LT") ≥ 70 %, it may exhibit total energy ("TE") transmission ≥ 56 % in the region of the glazing in which an optical sensor may be located. In this specification visible light transmission is measured with Illuminant A ("LT_{A}") and TE is measured according to Parry Moon Air Mass 2.

The tinted glass ply in the first and third aspects of the invention preferably has a thickness in the range from 1.4 to 3.0 mm, more preferably in the range from 1.5 to 2.6 mm and most preferably has a thickness of 2.1 mm. Normally in the laminated vehicle glazing, preferably when the tinted glass ply has a thickness as described, one ply of glass is clear glass. The ply of clear glass preferably has a thickness in the range from 1.4 to 3.0 mm, more preferably in the range from 1.5 to 2.6 mm and most preferably has a thickness of 2.1 mm.

Usually the laminated vehicle glazing in the first and third aspects of the invention includes a shadeband which extends across the top edge thereof. The shadeband is preferably included in the interlayer ply. Although the shadeband may be included in the interlayer ply in a number of different ways, for example, as a separate strip that is positioned adjacent to the interlayer ply prior to lamination of the glazing, it is convenient if the shadeband forms an integral part of the interlayer ply, i.e. a strip of the interlayer ply itself is tinted providing a shadeband in per se conventional manner. It is further preferable that the shadeband provides graded shading across the width of the strip; this is usually achieved by reducing the intensity of the tint down through the width of the shadeband from the top edge of the shadeband (the top edge of the shadeband runs substantially adjacent and parallel to the top edge of the glazing itself). The bottom edge of the shadeband, where the intensity of the tint is least, may be identified by reference to a bottom-edge marker which exists on one of the glass plies of the glazing. The actual location of the bottom edge of the shadeband, however, may be found in the region up to 25 mm either side from the location of the bottom-edge marker. The tinting agent used to create the shadeband is usually one of blue, green or grey. A grey shadeband in particular provides a suitable way to reduce glare to the occupants of the vehicle into which the glazing may be fitted.

At a position within the shadeband that is 70 mm from a shadeband bottom-edge marker, the transmission should be greater than 20 % when measured at wavelengths of between 800 and 950 nm. Preferably the measured transmission is greater than 25 % at wavelengths between 800 and 950 nm. Wavelengths between 800 and 950 nm correspond to electromagnetic radiation in the near-infrared ("NIR") region of the electromagnetic spectrum. A pulse of NIR radiation is commonly the entity emitted by current moisture sensors, which have a minimum transmission threshold for operation ranging from 20 % upwards; most current optical sensors also detect in the NIR region. Hence, the glazing fulfils the transmission requirements and thus may be used in conjunction with one of a number of current optical sensors.

For additional solar performance, an infrared radiation reflecting film may be incorporated into the laminated glazing. The film is provided with a "cut-back" area in the region which corresponds with the position in which an optical sensor may be located; the cut-back area is thus provided in a region of the glazing over which the shadeband extends. The cut-back area is provided to prevent loss of transmission in the IR, particularly in the 800 to 950 nm wavelength range, thus enabling use of an optical sensor with a laminated glazing having enhanced solar control properties.

Preferably a current optical sensor is mounted on the innermost surface of the glazing with respect to the vehicle. The innermost surface of the glazing is the surface of the inner glass ply which faces inwardly into the vehicle into which the glazing may be fitted. Preferably the optical sensor is attached to the innermost surface of the glazing
wherein attachment is normally achieved by use of a transparent, durable thin film adhesive.

The optical sensor is preferably a moisture sensor, for example a rain sensor, which detects the presence of water droplets of the outermost surface of the glazing and reacts by, for example, causing operation of the wiper blades over the outermost surface of the windscreen. Alternatively, the optical sensor is a light sensor, particularly a visible light and NIR radiation sensor.

The optical sensor is preferably mounted on the innermost surface of the glazing in a region of the glazing corresponding to the shadeband. In this region the sensor is obscured to a certain degree by the tint of the shadeband (an aesthetically pleasing result), yet its positioning within the shadeband ensures that at a wavelength of between 800 and 950 nm, greater than 20 % transmitted radiation reaches its sensing element.

In the region within the shadeband in which the optical sensor is positioned, the laminated glazing exhibits LT_{A} ≤ 50 %. The shadeband effectively reduces the amount of visible light transmitted by the glazing from ≥ 70 %.

For a better understanding, the present invention will now be more particularly described, by way of non-limiting example, with reference to and as shown in the accompanying drawings wherein:
Figure 1 is plan view of a laminated vehicle windscreen (not to scale) and
Figure 2 is a cross-sectional view of the laminated vehicle windscreen taken along the line A-A of Figure 1.

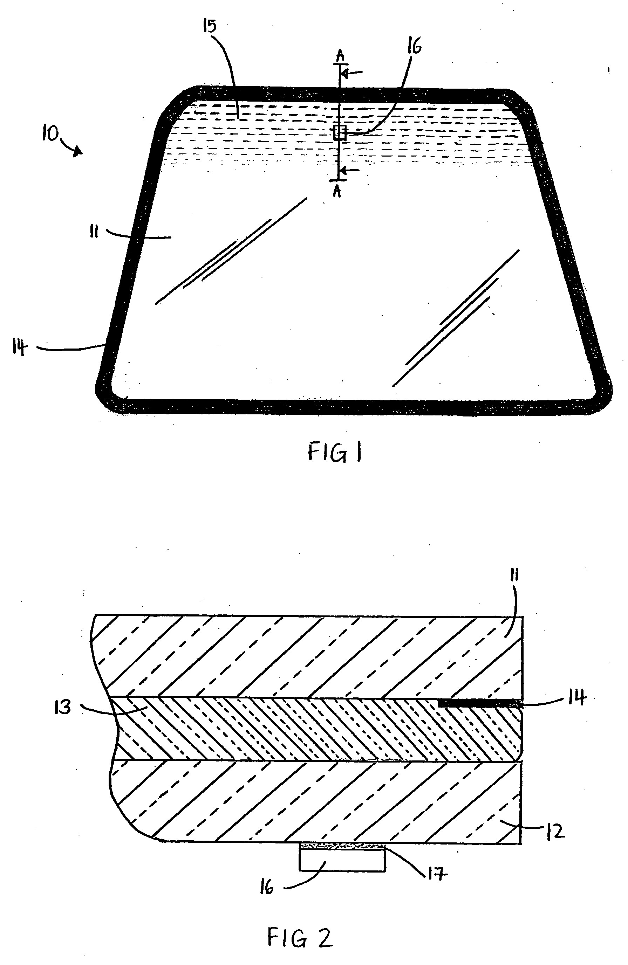

Laminated vehicle glazing 10 of Figure 1 comprises outer glass ply 11 which has an inner surface and an outer surface. The outer surface is the outermost surface of glazing 10 with respect to a vehicle into which glazing 10 may be fitted. The inner surface of outer glass ply 11 is provided around its periphery with obscuration band 14. Extending across the top edge of glazing 10 is shadeband 15. Optical sensor 16, in the form of a rain sensor, is attached to glazing 10 in the region over which shadeband 15 extends.

As a first example, outer glass ply 11 may be blue tinted glass which has a base glass composition including (by weight) 72.1 % SiO₂, 1.1 % Al₂O₃, 13.5 % Na₂O, 0.6 % K₂O, 8.5 % CaO, 3.9% MgO and 0.2 % SO₃, a colourant portion comprising (by weight) 0.53-0.55 % total iron, 0.13 % ferrous oxide and 52-55 ppm Co₃O₄. Glass of this composition exhibits, at 2.1 mm, an LT_{A} of 77.4 % and TE of 66.4 %. It has a dominant wavelength of 486.5 nm and an excitation purity of 4.3 %. Its colour is defined as a* = - 3.4 and b* = -3.4.

Outer glass ply 11 may, as example 2, be blue tinted glass which has the same base glass composition as described in the previous paragraph, a colourant portion comprising (by weight) 0.40 % total iron, 0.10 % ferrous oxide and 46 ppm Co₃O₄. Glass of this composition exhibits, at 3.9 mm, an LT_{A} of 71.4 % and TE of 59.3 %, and has a dominant wavelength of 485.3 nm and an excitation purity of 7.1 %. Its colour is defined as a* = -4.6 and b* = -5.9.

As example 3, outer glass ply 11 again may be blue tinted glass which has the same base glass composition as described above, a colourant portion comprising (by weight) 0.58 to 0.62 % total iron, around 0.14 % ferrous oxide and 48 to 55 ppm Co₃O₄. Glass of this composition exhibits, at 2.1 mm, an LT_{A} of around 76.4 to 78.3 % and TE up to 67.5 %. It has a dominant wavelength of 486.9 nm, an excitation purity of 4.5 % and colour defined as a* = -3.8 and b* = -3.5.

Outer glass ply 11 may, as example 4, be blue tinted glass which has the same base glass composition as described above, a colourant portion comprising (by weight) 0.45 to 0.49 % total iron, around 0.1 % ferrous oxide and 40 to 44 ppm Co₃O₄. Glass of this composition exhibits, at 3.85 mm, an LT_{A} of around 70.0 to 72.5 % and TE up to 59.3 %. It has a dominant wavelength of 486.0 nm, an excitation purity of 6.8 % and colour defined as a* = -5.0 and b* = -5.4.

As a fifth example, outer glass ply 11 may be grey tinted glass which has a base glass composition including (by weight) 72.1 % SiO₂, 1.1 % Al₂O₃, 13.5 % Na₂O, 0.6 % K₂O, 8.5 % CaO, 3.9 % MgO and 0.2 % SO₃, a colourant portion comprising (by weight) 0.475 % total iron, 0.18 % ferrous oxide and 3 ppm Se. Glass of this composition exhibits, at 2.1 mm, an LT_{A} of 80.0 % and TE of 62.9 %. It has a dominant wavelength of 527 nm and an excitation purity of 0.7 %. Its colour is defined as a* = -2.2 and b* = +1.0.

Glass having the same composition as that described in the previous paragraph exhibits, at 3.9 mm, an LT_{A} of 71.3 % and TE of 48.0 %, and has a dominant wavelength of 525.4 nm and an excitation purity of 1.3 %. Its colour is defined as a* = -3.9 and b* = +1.7.

Further examples of the colourant portion of a tinted glass (having a base glass portion typically as described above) which may be used as outer glass ply 11 are given in Table 1 (along with corresponding optical properties).

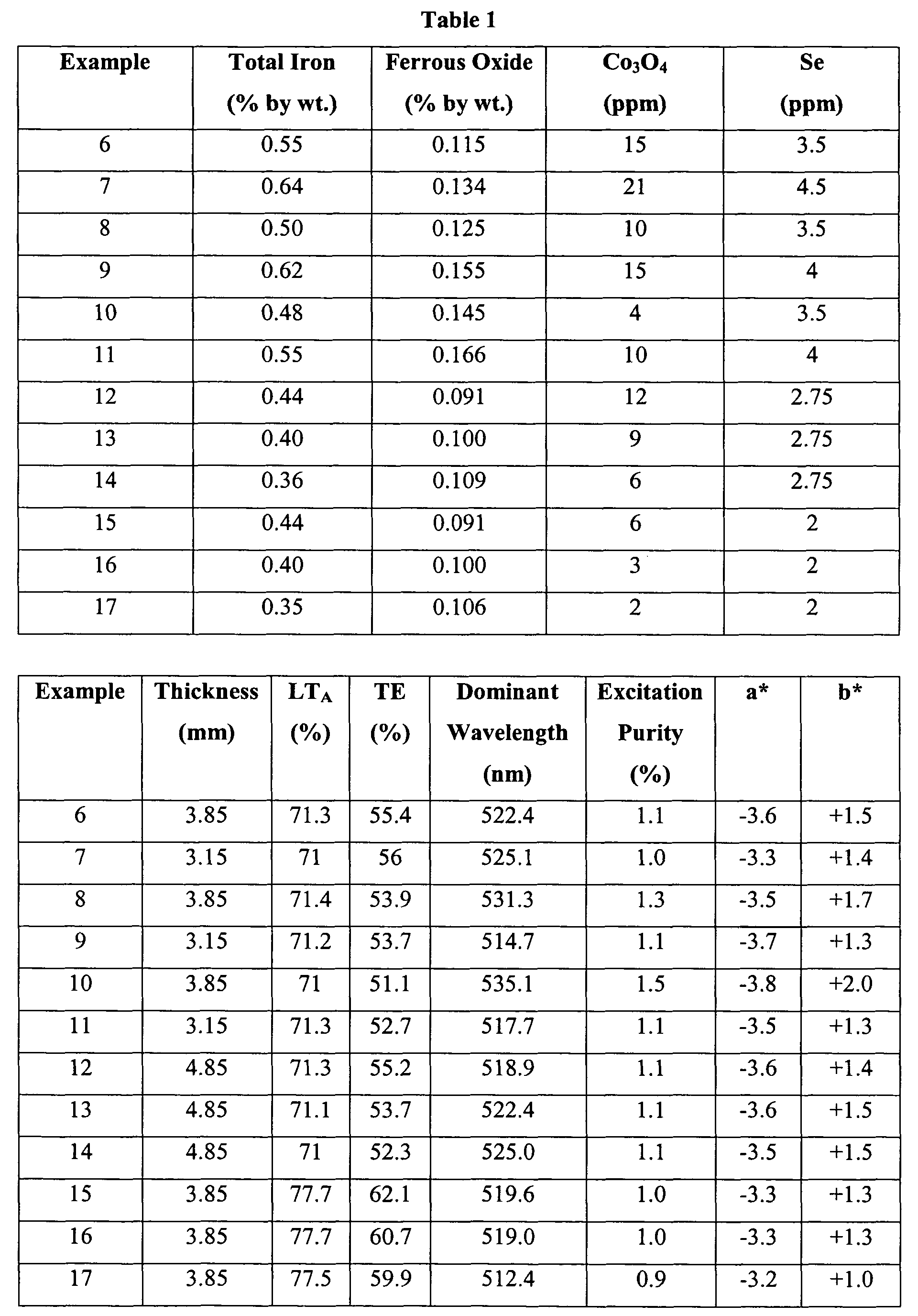

Whichever colourant composition is chosen to tint outer glass ply 11, the thickness in which the ply is used in glazing 10 is 2.1 mm.

Obscuration band 14 around the periphery of the inner surface of outer glass ply 11 is an aesthetic feature of glazing 10; it is printed from black ceramic ink which, when fired, provides a neat finish to the periphery of a glazing, obscuring in use the peripheral supporting surface to which it is bonded.

The cross sectional view of Figure 2 illustrates that laminated vehicle glazing 10 further comprises inner glass ply 12 and interlayer ply 13, in the form of a PVB sheet, which nominally has a thickness of 0.76 mm. Inner glass ply 12 is a clear glass ply which has a typical composition including: 72.1 % SiO₂, 1.1 % Al₂O₃, 13.5 % Na₂O, 0.6 % K₂O, 8.5 % CaO, 3.9% MgO, 0.13 % Fe₂O₃ and 0.2 % SO₃. For the avoidance of doubt, although outer glass ply 11 has been described as the glass ply that is tinted, it is equally possible that inner glass ply 12 could be tinted alternatively or additionally to outer glass ply 11. Interlayer ply 13 interleaves between outer glass ply 11 and inner glass ply 12, laminating the two glass plies together when all three are simultaneously subjected to a lamination process in an autoclave. Shadeband 15 is provided as an integral part of interlayer ply 13, i.e. an elongate section of interlayer ply 13 is variably tinted, e.g. to a grey colour, thereby creating shadeband 15. Optical sensor 16 is attached to the innermost surface of glazing 10 by adhesive 17, or by use of a bracket (not shown), normally in a separate step after production of the glazing.

Laminated glazing 10 has a thickness of 4.96 mm when constructed from outer glass ply 11 and inner glass ply 12, each of 2.1 mm thickness, and PVB interlayer ply 13 of 0.76 mm thickness. In the case when glass ply 11 is of the composition containing 0.53 to 0.55 % total iron described previously (a blue tinted glass composition) and glass ply 12 is of the clear glass composition described previously, glazing 10 exhibits 76.3 % LT_{A} and 59.9 % TE; its overall tint being defined by a* = -4.6 and b* = -2.6. When glass ply 11 is of a composition described in Example 3 earlier (specifically containing 0.60 % total iron, 0.14 % ferrous oxide and 50 ppm Co₃O₄) and glass ply 12 is of the clear glass composition described previously, glazing 10 exhibits 76 % LT_{A} and 58 % TE; its overall tint being defined by a* = -4.8 and b* = -2.6. However, when glass ply 11 is of the grey tinted glass composition described previously and glass ply 12 is of the clear glass composition described previously, glazing 10 exhibits 78.8 % LT_{A} and 56.9 % TE; its overall tint being defined by a* = -3.3 and b* = +1.8.

Laminated glazing 10 has a thickness of 4.46 mm when constructed from outer glass ply 11 in 2.1 mm thickness, inner glass ply 12 in 1.6 mm thickness, and PVB interlayer ply 13 in 0.76 mm thickness. When glass ply 11 is of a composition described in Example 3 earlier (specifically containing 0.60 % total iron, 0.14 % ferrous oxide and 50 ppm Co₃O₄) and glass ply 12 is of the clear glass composition described previously, glazing 10 exhibits 76 % LT_{A} and 59 % TE; its overall tint being defined by a* = -4.6 and b* = -2.6.

PVB sheet that is provided with a locally pre-tinted shadeband is currently available from Sekisui S-Lec of First Point, Buckingham Gate, Gatwick, West Sussex, RH6 0NT, England or from Solutia Europe S.A./N.V. of Parc Scientifique, Rue Laid Bumiat 3, Louvain-La-Neuve, B-1348 Belgium. Rain sensors are currently available from Robert Bosch GmbH, Postfach 106050, D-70049 Stuttgart, Germany and rain and light sensors are currently available from Hella KG Hueck & Co., Rixbecker Strasse 75, 59552 Lippstadt, Germany.

## Claims

1. A laminated vehicle glazing comprising
two glass plies laminated together by an interlayer ply therebetween,
wherein one glass ply is tinted and has a colourant portion comprising 0.30 to 0.65 % by weight total iron (calculated as Fe₂O₃), a ferrous oxide content (calculated as FeO) up to 0.25 % by weight and a cobalt content (calculated as Co₃O₄) greater than 40 ppm or a selenium content (calculated as Se) up to 10 ppm,
with the proviso that one or both of cobalt and selenium must be present in the tinted glass ply.

2. Tinted glass in sheet form having a composition including a colourant portion comprising 0.30 to 0.65 % by weight total iron (calculated as Fe₂O₃), a ferrous oxide content (calculated as FeO) up to 0.25 % by weight and a cobalt content (calculated as Co₃O₄) greater than 40 ppm or a selenium content (calculated as Se) up to 10 ppm, with the proviso that one or both of cobalt and selenium must be present in the glass.

3. Tinted glass in sheet form as claimed in claim 2 wherein the sheet has a thickness of 1.4 to 3.0 mm.

4. Tinted glass in sheet form as claimed in claim 2 wherein the sheet has a thickness of 3.5 to 5.0 mm.

5. Tinted glass in sheet form as claimed in any of claims 2 to 4 wherein the glass has a cobalt content (calculated as Co₃O₄) greater than 40 ppm and a sheet of said glass of thickness 2.1 mm or a sheet of said glass of thickness 3.9 mm has a dominant wavelength between 480 and 500 nm (D65, 2° observer), an excitation purity (D65, 2° observer) of at least 3 % and colour specified by the CIELAB co-ordinates (D65, 2° observer) -9 ≤ a* ≤ -2, -9 ≤b* ≤ -1.

6. Tinted glass in sheet form as claimed in any of claim 2 to 4 wherein the glass has a selenium content (calculated as Se) up to 10 ppm and a sheet of said glass of thickness 2.1 mm or a sheet of said glass of thickness 3.9 mm has a dominant wavelength between 510 and 535 nm (D65, 2° observer), an excitation purity (D65, 2° observer) up to 3 % and colour specified by the CIELAB co-ordinates (D65, 2° observer) -6 ≤ a* ≤ 0, -3 ≤ b* ≤ +3.

7. A laminated vehicle glazing comprising two glass plies laminated together by an interlayer ply therebetween, wherein one glass ply is tinted glass as claimed in any of claims 2 to 6.

8. A laminated vehicle glazing as claimed in claim 1 or claim 7, for use with an optical sensor, wherein the glazing has an LT_{A} ≥ 70 % and exhibits TE ≥ 56 % when measured (Air Mass 2, Parry Moon) in the region of the glazing in which an optical sensor is to be located.

9. A laminated vehicle glazing as claimed in claim 1, 7 or 8 wherein the tinted glass ply has a thickness in the range from 1.4 to 3.0 mm.

10. A laminated vehicle glazing as claimed in claim 1 or any of claims 7 to 9 wherein one ply of glass is clear glass.

11. A laminated vehicle glazing as claimed in claim 10 wherein the clear glass ply has a thickness in the range from 1.4 to 3.0 mm.

12. A laminated vehicle glazing as claimed in claim 1 or any of claims 7 to 11 wherein the glazing includes a shadeband which extends across the top edge thereof.

13. A laminated vehicle glazing as claimed in claim 12 wherein the shadeband is included in the interlayer ply.

14. A laminated vehicle glazing as claimed in claim 1 or any of claims 7 to 13 wherein at a position within the shadeband that is 70 mm from a shadeband bottom-edge marker, transmission is greater than 20 % at wavelengths of between 800 and 950 nm.

15. A laminated vehicle glazing as claimed in claim 1 or any of claims 7 to 14 wherein an optical sensor is mounted on the innermost surface of the glazing with respect to the vehicle.

16. A laminated vehicle glazing as claimed in claim 15 wherein the optical sensor is a moisture sensor.

17. A laminated vehicle glazing as claimed in claim 15 wherein the optical sensor is a light sensor.

18. A laminated glazing as claimed in any of claims 15 to 17 wherein the optical sensor is mounted on the innermost surface of the glazing in a region of the glazing corresponding to the shadeband.

19. A laminated glazing as claimed in claim 18 wherein the glazing exhibits LT_{A} ≤ 50 % in the region in which the optical sensor is positioned.

20. A laminated vehicle glazing comprising
two glass plies laminated together by an interlayer ply therebetween,
wherein one glass ply is tinted and has a colourant portion comprising 0.35 to 0.65 % by weight total iron (calculated as Fe₂O₃), a ferrous oxide content (calculated as FeO) up to 0.25 % by weight and a cobalt content (calculated as Co₃O₄) greater than 40 ppm.

21. A laminated vehicle glazing comprising
two glass plies laminated together by an interlayer ply therebetween,
wherein one glass ply is tinted and has a colourant portion comprising 0.30 to 0.60 % by weight total iron (calculated as Fe₂O₃), a ferrous oxide content (calculated as FeO) up to 0.25 % by weight and a selenium content (calculated as Se) up to 10 ppm.

22. Tinted glass in sheet form having a composition including a colourant portion comprising 0.35 to 0.65 % by weight total iron (calculated as Fe₂O₃), a ferrous oxide content (calculated as FeO) up to 0.25 % by weight and a cobalt content (calculated as Co₃O₄) greater than 40 ppm.

23. Tinted glass in sheet form having a composition including a colourant portion comprising 0.30 to 0.60 % by weight total iron (calculated as Fe₂O₃), a ferrous oxide content (calculated as FeO) up to 0.25 % by weight and a selenium content (calculated as Se) up to 10 ppm.
